(19) **Europäisches Patentamt European Patent Office Office européen des brevets**

(11) **EP 4 550 261 B1**

(12) **EUROPEAN PATENT SPECIFICATION**

(45) Date of publication and mention of the grant of the patent:
**18.03.2026 Bulletin 2026/12**

(21) Application number: **23207432.8**

(22) Date of filing: **02.11.2023**

(51) International Patent Classification (IPC):
*G06T 7/11* (2017.01)     *G06T 7/62* (2017.01)

(52) Cooperative Patent Classification (CPC):
**G06T 7/11; G06T 7/62;** G06T 2207/10028;
G06T 2207/20081; G06T 2207/20084

(54) **ANIMAL PHYSICAL PARAMETER ESTIMATION BY IMAGE PROCESSING**

SCHÄTZUNG DER PHYSIKALISCHEN PARAMETER VON TIEREN DURCH BILDVERARBEITUNG

ESTIMATION DE PARAMÈTRES PHYSIQUES D'ANIMAUX PAR TRAITEMENT D'IMAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**07.05.2025 Bulletin 2025/19**

(73) Proprietor: **Agile Robots SE**
**81369 München (DE)**

(72) Inventors:
• **Kandapagari, Pavan Kumar**
**81477 München (DE)**
• **Kondamadugula, Leela Sai Prabhat**
**81477 München (DE)**
• **Topcam, Pinar**
**81477 München (DE)**
• **Sharma, Karan**
**81477 München (DE)**
• **Marton, Zoltan**
**81477 München (DE)**

(74) Representative: **Keilitz & Partner Patentanwälte PartGmbB**
**Triftstraße 5**
**80538 München (DE)**

(56) References cited:
**CN-A- 110 288 580**     **US-A1- 2021 153 479**
**US-A1- 2023 342 902**

## Description

## BACKGROUND OF THE INVENTION

The invention relates to determining a value for a physical parameter of an animal by computer-implemented image processing using neural networks.

In animal husbandry, it is often relevant to measure one or more physical parameters of animals, in particular weight and size, on a regular basis so that the growth of the animals can be monitored.

The standard approach is to pass animals individually from a holding pen through a narrow passageway into a gated stall where a weighing device is situated. The weighing device is then used to determine the weight of each animal as it passes through the passageway and is contained in the stall. Not only is this process labor-intensive, but it can also put the animals under stress.

To avoid the need for the standard weighing approach, over the last few decades various computer-implemented image processing methods to animal weight estimation, most notably for pigs, have been developed. In recent years, many of these employ Deep Learning Neural Networks (DLNNs).

Zhang, J.; Zhuang, Y.; Ji, H.; Teng, G. Pig Weight and Body Size Estimation Using a Multiple Output Regression Convolutional Neural Network: A Fast and Fully Automatic Method. Sensors 2021, 21, 3218. https://doi.org/10.3390/s21093218 [1] in its introduction summarizes known machine vision approaches to pig weight estimation, which it classifies into four approaches: stereo projection of a shadow of the pig onto a floor; image processing of a two-dimensional (2D) image of a pig's back; processing a depth map image of a pig's back; and an ellipse fitting method which is based on correlations between pig weight and geometrical parameters identifiable from an image of the pig. The subject of Zhang *et al ibid* is to use a deep learning neural network model that receives both 2D images and depth map images as input and processes these images to determine pig weight.

Suwannakhun, S.; Daungmala, P. Estimating Pig Weight with Digital Image Processing using Deep Learning. In Proceedings of the 2018 14th International Conference on Signal-Image Technology & Internet-Based Systems (SITIS), Beijing, China, 26-29 November 2018 [2] relates to an example of the above-mentioned ellipse fitting method which uses a neural network.

US2022221325A1 (Viking Genetics FMBA) [3] discloses a computer-implemented image processing method for estimating the weight of animals, specifically cattle. A depth map image is acquired from above to capture an image of the back of the animal. The weight of the animal is then calculated by correlating the depth map image against a reference model comprising information of the topology of the back versus the weight for the breed of cattle being assessed.

CN113240574A (Shenzhen Xiwei Intelligent Technology Co Ltd) [4] discloses a computer-implemented image processing method for estimating the weight of animals. A 2D image of the animal's back from above is acquired by a fisheye camera and from the 2D image an estimate of the animal's height is made. Optionally, a distance sensor is also provided to allow a more accurate value for the animal's height to be determined than is possible with the fisheye lens, in which case both the first height obtained from the 2D image captured by the fisheye camera is scaled by the second height acquired by the distance sensor. The area of the 2D image relating to the animal is segmented with a segmentation algorithm that is either based on conventional image processing techniques such as thresholding, morphological changes, blob analysis etc., or alternatively a neural network, i.e., artificial intelligence. The animal height in sub-areas around each of a plurality of specific target points on the back of the animal is then determined. These height values are either the first height values obtained from the 2D image only or a combination of the first and second height values obtained from the 2D image and distance sensor data respectively. A weight value is then determined for the sub-area around each target point and these weight values are combined to obtain a total weight value for the animal.

CN110288580A discloses a livestock weight measuring method and device and a readable storage medium.

US2023342902A1 relates to a method and system for automated evaluation of animals.

## SUMMARY OF THE INVENTION

The invention is set out in the appended set of claims.

According to one aspect of the disclosure there is provided a computer-implemented image processing method for determining a value for a physical parameter of an animal of a specified species or breed, the method comprising:

providing an image dataset of an image area including a depth map image captured by a camera from a viewpoint, the image area containing an animal imaged against a background plane,
analyzing the depth map image with a plane estimation algorithm to identify the background plane and from that determine a distance value between the viewpoint and the background plane;
applying a segmentation algorithm to the image dataset to identify an animal in the image area and define a corresponding animal mask;
modifying the depth map image to reset depth values lying outside the animal mask to the viewpoint-to-background-plane distance value;
supplying the depth map image with its reset depth values to a neural network to determine a physical parameter of the animal; and

receiving an estimated value of the physical parameter of the animal as output from the neural network, the neural network having been previously trained through analysis of similar image datasets of animals of the specified species and/or breed whose physical parameter values were known.

We conducted comparative performance tests to compare our specific implementation of the above method with other approaches using the same overall dataset, i.e., with a neural network trained from the same training dataset and using the same input image datasets (or subsets thereof). The performance tests showed that the method according to the invention performed significantly better than:

- when RGB images only are used (i.e., no depth map images);
- when depth map images only are used (i.e., no RGB images);
- when one channel of the RGB image is replaced with the depth map image; and
- when the method is identical to the method of the invention using both RGB and depth map images, except that background plane estimation is not carried out so that the depth map image values outside the animal mask are not reset to background values but rather retained with their as-acquired values.

A significant advantage of embodiments of the invention is that the background plane distance obtained through analysis of the depth map image provides absolute scaling for the segmented animal. The absolute scaling provided by identifying the background plane is an alternative to including a reference object, such as a checkerboard, in the image for absolute scaling, as is known from the prior art especially for imaging dead pigs. The absolute scaling provided by identifying the background plane also means that the viewpoint can vary from image to image without affecting the method, thereby enabling use of a hand-held imaging apparatus to acquire the images. For example, in our specific implementation, we used a neural network for the parameter prediction that was trained with an image data training set of images acquired with a range of vertical distances from camera viewpoint to ground of between 1.4 and 1.9 meters, and also with a range of camera tilt angles. The trained neural network can therefore account for a person holding a hand-held imaging apparatus at a range of heights and a range of tilt angles. A variable tilt angle from image to image also does not cause any difficulty for our plane estimation, since once the background plane is identified from the depth map image, this will automatically identify the tilt angle. The freedom to use a hand-held imaging apparatus in our method contrasts with several prior art methods which do not use reference objects for absolute scaling but rather rely on a fixed position of the imaging device, i.e., camera. The fixed position locates the camera such that its viewpoint is at a known and fixed distance (and fixed tilt angle) from the ground, this fixed distance being used to provide absolute scaling. In such prior art methods, it is the known fixed camera position that allows for a smaller animal closer to the viewpoint to be distinguished from a larger animal farther from the viewpoint. Similarly, our method is not only suitable for processing image datasets acquired by hand-held imaging apparatus but can also be used to process image datasets acquired by fixed position image acquisition devices where the positioning is not critical. For example, since the training dataset with which the parameter predicting neural network is a *priori* known, then the specification for fixing a camera can be defined accordingly. In our example implementation, the specification would be to fix the camera at a height from the ground between 1.4 and 1.9 meters and at any tilt angle that is generally downward facing to ensure a sufficiently large area of the ground was included in the image area taking account of the image acquisition device's field of view.

A further significant advantage of the invention is that embodiments can be realized which can process multiple animals contained in a single image area. This is possible, since the segmentation algorithm can be configured to segment out however many animals are in the image area, and since the plane estimation algorithm can also function in the presence of an arbitrary number of animals in the image area. Moreover, it is not necessary to physically constrain the animal in a stall to control its pose, e.g., to ensure it is standing and not lying down when the image dataset is acquired. Namely, a neural network can be used as the segmentation algorithm and can be trained to distinguish with a binary classifier between a desired pose (for which the parameter predicting neural network has been trained), such as a standing pose, from any other pose (for which the parameter predicting neural network has not been trained). It is therefore not necessary to ensure that animals are contained one at a time in a stall to ensure that the animal is standing and that only one animal is in the image area. Rather, the animals can roam freely together in their normal pen and image datasets can be acquired over a period of time to ensure that the parameter prediction is carried out for all animals, e.g., does not exclude an animal that may for some but not all of the time period be lying down or partly obscured through contact with other animals.

## BRIEF DESCRIPTION OF THE DRAWINGS

This invention will now be further described, by way of example only, with reference to the accompanying drawings.

Figure 1 is a perspective view of a hand-held apparatus comprising an imaging device for acquiring color (RGB) and depth map image images over an image area A and Figure 1A is a view from below of the imaging device.

Figure 2 is an example RGB image acquired by the hand-held imaging apparatus of Figure 1, the image containing at least one animal.

Figure 3 is an example depth map image acquired by the hand-held imaging apparatus of Figure 1 at the same time as acquiring the RGB image of Figure 2.

Figure 4 is a flow diagram of an image processing method according to an embodiment of the invention.

Figure 5 shows a processed version of the RGB image of Figure 2 in which the animal pixels have been segmented.

Figure 6 shows an intermediate processed version of the depth map image of Figure 3 in which the non-animal pixels as identified by segmenting the RGB image have been set to a null value.

Figure 7 shows a further processed version of the processed depth map image of Figure 6 in which the non-animal pixels have been set to a value representing the estimated distance to ground in the depth map image as determined by processing the non-animal pixels of the depth map image of Figure 3 with a plane estimation algorithm.

Figure 8 is a block diagram of a tensor processing unit (TPU) which may be used for performing the computations involved in implementing the neural network architecture either for training or in a live system.

Figure 9 is a block diagram of a computing apparatus that may be used for example as the host computer for the TPU of Figure 8.

## DETAILED DESCRIPTION

In the following detailed description, for purposes of explanation and not limitation, specific details are set forth in order to provide a better understanding of the present disclosure. It will be apparent to one skilled in the art that the present disclosure may be practiced in other embodiments that depart from these specific details.

In the following we describe an embodiment of the invention which uses image processing of an image dataset to predict a physical parameter of an animal, wherein the physical parameter is weight and the animal species is pigs. The image dataset supplied as input to the method is a 2D image, specifically an RGB (color) image, and a depth map. A depth map is sometimes referred to as a point cloud with each point being analogous to a pixel in a monochrome 2D image but carrying a distance value rather than a grayscale value. In the following, we therefore refer to the depth map as a depth map image and its points as pixels. The image dataset is acquired from a viewpoint located above an animal that is standing on ground. The RGB image and the depth map image thus form a pair of images taken from substantially the same viewpoint, so the two images have close spatial correspondence and can be compared, for example on a pixel-by-pixel basis. The 2D image is a three-channel image and the depth map image is a one-channel image.

The formalism for the training the deep learning based neural network is as follows:

- Task (T): To predict the weight of an animal.

- Experience (E): A set of RGB (R) and corresponding Depth (D) images [X -> (R+D)] along with the target weight (Y) of the animal.

- Performance (P): Average absolute error between target weight (Y) and predicted weight (y).

For the method, it is assumed axiomatically that the projected surface area (A) in the images from a top view of the standing animal is proportional to the volume (V) of the animal, which is, in turn, proportional to the weight (Y) of the animal.

- 

$$A \propto V \propto Y$$

A pipeline is needed for determining the animal's weight, since the method takes account not only of the *local context* of the animal but also its *global context.*

*Local context* is required to identify the animal in the image without the noise from nearby objects and/or by removing other instances of the same animal. Specifically, our method uses segmentation to isolate and select one animal in the image for further processing. This can be achieved by using an instance segmentation model based on a neural network, such as "MaskRCNN", "MaskFormer" or "Yolact". The RGB image is used as the basis for the segmentation to extract a mask for one animal in the RGB image.

The segmentation process to isolate an animal, results in the *global context* of the animal being lost. Specifically, in the segmented portion of the RGB image the distance between the viewpoint and the animal is not known. Consequently, the absolute area of the animal is not known, so our axiom of $A \propto Y$ cannot be applied based only on the segmented portion of the RGB image containing the animal. For example, the closer an animal is to the viewpoint, the larger its projected area will be on the hand-held imaging apparatus and hence in the RGB image, so that a smaller animal located closer to the viewpoint will appear in the segmented portion of the RGB image to be the same size as a larger animal located farther from the viewpoint.

To address this issue and provide global context, a plane estimation algorithm is applied to the pixels of the depth map image that lie outside the animal mask in order to determine a plane for the background, which in the present embodiment is the plane of the ground on which the animal is standing and yields a distance value, d, for the distance between the camera viewpoint and the background plane.

A modified depth map image is then synthesized retaining the depth map values within the sub-area of the animal, i.e. within the mask, to provide *local context* and flooding the depth map values outside the sub-area of the animal, i.e., outside the mask, with the unidirectional, e.g. vertical, distance value to the estimated background plane to provide *global context.*

It is the case that most available open-source neural network models for processing images require input of three-channel data as would be the case for an RGB image with red, green and blue frames. To use such models for processing the depth map image, we therefore triplicate the modified depth map image to provide three arrays for input into the neural network. In our specific example, the model we used was based on the one published by François Chollet "Xception: Deep Learning with Depthwise Separable Convolutions" 2017(http://arxiv.org/abs/1610.02357 / DOI: https://doi.org/10.48550/arXiv.1610.02357) which we repurposed by replacing the classifier stage with a regressor.

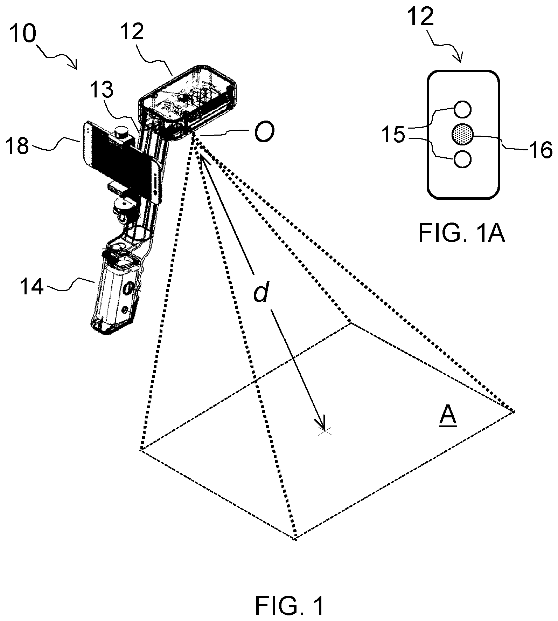

Figure 1 is a perspective view of a hand-held imaging apparatus 10 for acquiring an image dataset. The hand-held imaging apparatus 10 comprises an imaging device 12. As shown in bottom view in Figure 1A, the imaging device 12 comprises a first camera 16 for acquiring 2D images, for example a conventional RGB camera, and a second camera 15 for acquiring depth map images, for example a stereoscopic camera with two adjacent lenses. The 2D camera 16 is operable to acquire red, green and blue image frames which together form an RGB image. The depth map camera 15 is operable to acquire point clouds indicating depth or distance from the camera viewpoint O. In the context of the main embodiment of the invention described in the following, the hand-held imaging apparatus 10 is held by a hand grip part 14 with the imaging device 12 being supported in a downward facing attitude at an elevated location by an elongate frame piece 13. The frame piece 13 also comprises a mount for a smartphone 18 which can be used to store the image datasets acquired by the imaging device 12 and wirelessly transmit the image datasets onward to the cloud or a local network for further processing. The imaging device 12 is operable to acquire pairs of RGB and depth map images simultaneously. The cameras 15 and 16 preferably have the same or similar fields of view, so that the RGB and depth map images that they respectively capture cover the same or approximately the same image area A. The cameras 15 and 16 also preferably capture their respective RGB and depth map images from the same viewpoint O or at least respective viewpoints that are so closely coincident that they can be assumed to be the same for the purposes of the joint processing of a simultaneously acquired pair of RGB and depth map images. The image area A is illustrated as being a plane lying at a vertical distance d from the viewpoint O.

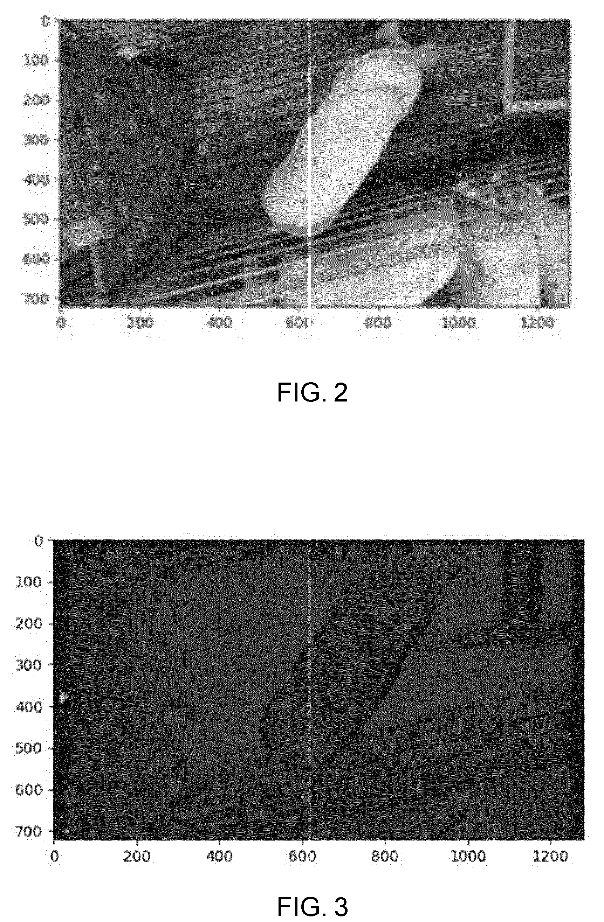

Figure 2 is an example RGB image acquired by the hand-held imaging apparatus of Figure 1, the image containing one complete, standing pig.

Figure 3 is an example depth map image acquired by the hand-held imaging apparatus of Figure 1 at the same time as acquiring the RGB image of Figure 2.

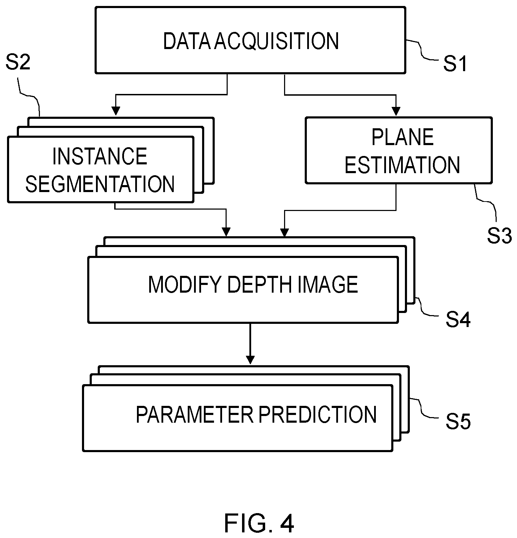

Figure 4 is a flow diagram of a physical parameter estimation method according to an embodiment of the invention comprising the steps of: data acquisition (Step S1), instance segmentation which segments standing, complete animals from the image (Step S2), background plane estimation to estimate the distance of the image to the background (Step S3), modified depth map image generation (Step S4), and physical parameter prediction by a neural network using classification by a convolutional neural network (CNN) architecture (Step S5).

**Step S1** is the data acquisition stage using the hand-held imaging apparatus of Figure 1 to provide a matched pair of images taken from a camera viewpoint located above an animal that is standing on the ground. The matched pair of images comprises a 2D image and a corresponding depth map image, each image comprising an array of pixels.

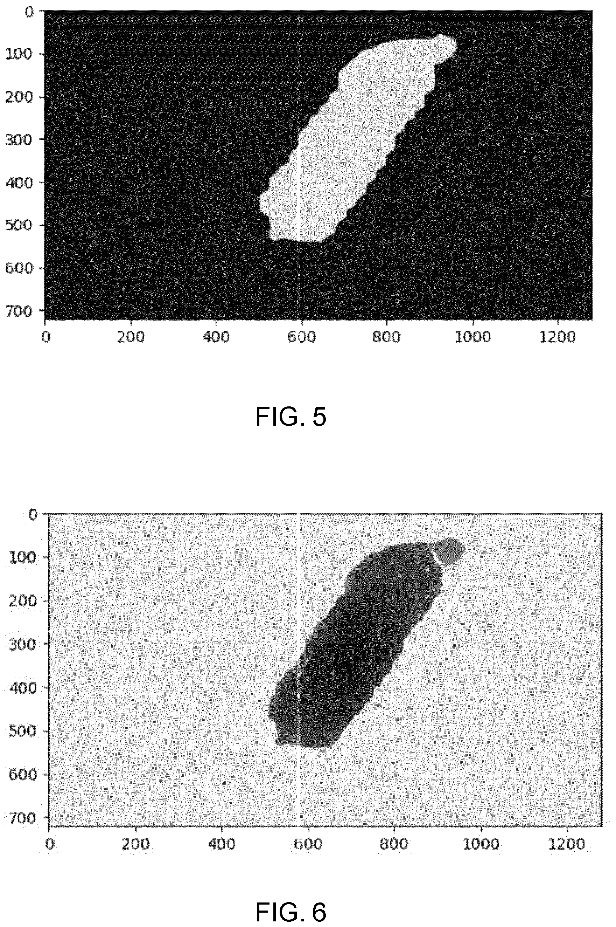

**Step S2** is the segmentation stage in which the 2D image is processed by applying a segmentation algorithm to identify one or more contiguous sub-areas of pixels that each represent a complete, standing animal, as defined by respective binary masks. In our implementation, we use a neural-network-based segmentation algorithm, for example a publicly available Vision Transformer (ViT), such as Maskformer, SegViT, etc., to segment out the different instances of animals in the RGB image. A classification model then determines if an animal is standing and complete, i.e., fully visible. Imposing the conditions of standing and complete has been shown to significantly improve the accuracy of the predictions. For example, a pig which is lying down but fully visible is excluded and also a pig which is standing but is partly obscured by another object or is partly outside the image area. When a pig satisfying these conditions is identified, its associated pixels are filtered out of the RGB image using the Segmentation Mask (*segMask*) generated by the ViT model. Figure 5 shows the segmentation mask *segMask* for the RGB image as determined by processing the RGB image of Figure 2. A significant advantage of our segmentation algorithm is that, if the image area contains multiple animals, the segmentation algorithm will segment out all of them providing they also fulfill the standing and fully visible condition. This capability is indicated schematically in Figure 4 with the multiple nested boxes of Step S2.

**Step S3** is a background plane estimation stage in which the depth map image is processed with a plane estimation algorithm to estimate a plane for the ground on which the animal is standing. The vertical distance, i.e., height, of the camera viewpoint to the ground provides *global context* to provide absolute scaling for the depth image data in the sub-area of the segmented animal which only has *local context.*

As schematically illustrated in Figure 4, Steps S2 and S3 are carried out independently of each other. In this embodiment, the independence is clear from the fact that Step S2 is performed on the RGB image and Step S3 on the depth map image. However, in other embodiments, it would be possible to carry out the segmentation, i.e., Step S2, on the depth map image. Even in this case, Steps S2 and S3 are independent of each other, since the background plane determination does not utilize the segmentation mask and the segmentation does not require knowledge of the background plane.

**Step S4** modifies the depth map image based on the results of Step S2 and Step S3, i.e., the segmentation mask and the determined background plane. Namely, the depth values of pixels in the depth map image that lie outside the animal sub-area, i.e., outside the mask, are reset to values corresponding to a distance between the viewpoint of the matched pair of images and the estimated background plane to provide a uniform background free of clutter. For example, referring to Figure 2 and Figure 3, it will be appreciated that the depth information of the pen walls and gates carries no useful information for weight estimation, which is why their exclusion from the dataset input to the neural network improves the accuracy of the weight estimation. Figure 6 shows how, using the segmentation mask *segMask* generated from Step S2, the pig is segmented out of the depth map image. This requires the RGB image and the depth map image to be aligned, i.e., have a one-to-one spatial correspondence. After Step S4, the points of the depth map image are measured values for the viewpoint-to-animal distance within the mask and null values outside the mask.

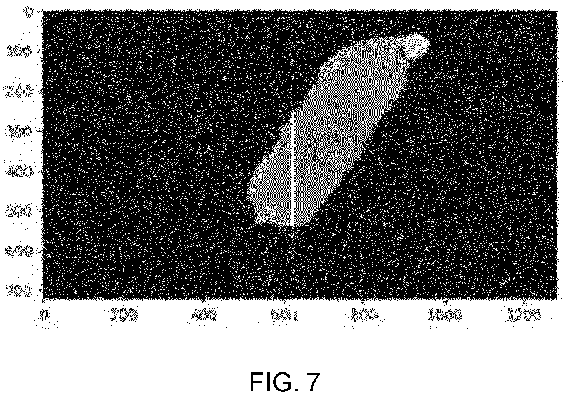

In our implementation, a one-to-one spatial correspondence between the pixels of the RGB image and the points of the depth map image is assumed based on the fact that the respective lenses and sensors of the hand-held imaging apparatus are so close to each other that the image pairs they capture can be assumed to be taken from the same viewpoint. Alternatively, if this assumption is not made then a warp transform can be applied to one of the two images to spatially map it onto the other. The distance of the background plane, i.e. here the ground, to the camera viewpoint as determined according to the estimated background plane is then filled into the background of the depth data values, i.e. the point cloud distance values are all set to the vertical distance between the viewpoint and the estimated background plane as shown by Figure 7. Namely, Figure 7 shows an example modified depth map image in which the points of the depth map image are measured values for the viewpoint-to-animal distance within the mask and single valued outside the mask with the value of the viewpoint-to-background-plane vertical distance as determined by the plane estimation algorithm.

**Step S5** supplies the modified depth map image to a neural network. Since the modified depth map image is single channel, it is necessary to triplicate the image into three-channels to match the three-channel input that is required by standard open-source CNN architectures. Before input into the CNN, the three-channel depth image is normalized, such that the data is in a fixed range, e.g. [0, 255]. The resulting processed depth map image as input into the CNN is called "Triplicated Depth Data with Distance (T3D)". The CNN then outputs a predicted value of the weight of the animal. The CNN will have been previously trained through analysis of similar data of animals of known weight. A CNN classification model such as the modified version of the XceptionNet model from Frangois Chollet referred to above can be used as the weight estimator, i.e., the Chollet Xception model with a replaced classifier stage for a regressor.

In the case of multiple valid animal instances of number *n* being identified in Step S2 by the segmentation algorithm, Steps S4 and S5 are modified as follows. Step S4 is carried out *n* times, once for each identified animal instance, each individual performance of Step S4 being labelled Step S4-*n*. The mask areas of the non-selected animal instance(s) are then treated as non-animal sub-areas of the image dataset. In other words, within the mask of the selected animal instance, the points of the depth map image are measured values for the viewpoint-to-animal distance and, outside the selected mask, the points are null values. Step S5 is also carried out *n* times, once for each identified animal instance, using the respective outcomes of Step S4-*n*. The outcome of Step S5-*n* is a depth map image whose points have measured values for the viewpoint-to-animal distance within the selected mask *n* and have the same single value outside the selected mask *n* (including within the non-selected masks <>*n*) with the single value being the viewpoint-to-background-plane distance as determined by the plane estimation algorithm. In Step S5, the neural network is thus run through *n* times to determine *n* weight values for the *n* animal instances identified in the image area. The catering for multiple instances is indicated schematically in Figure 4 with the multiple nested boxes of Steps S2, S4 and S5.

In summary of the above main embodiment, we have described a computer-implemented image processing method for estimating the weight of a species or breed of animal, the method comprising:

providing a matched pair of images taken by a camera from a viewpoint located above an animal that is standing on ground, the matched pair of images comprising a 2D image and a depth map image;

analyzing the depth map image with a ground plane estimation algorithm to determine an estimated ground plane for the ground on which the animal is standing with reference to the depth map image;

processing the 2D image by applying a segmentation algorithm to identify a contiguous sub-area in the 2D image and the corresponding depth map image that represent the animal;

resetting depth values outside the animal sub-area to values corresponding to a distance between the viewpoint of the matched pair of images and the estimated ground plane;

normalizing the depth map image to restrict the data to a fixed numerical range to generate a processed depth map image of triplicated depth data with distance (T3D);

supplying the processed depth map image with its reset depth values outside the animal sub-area to a neural network, the neural network having been previously trained through analysis of similar depth map images of animals of known weight; and

receiving a predicted weight value for the animal as output from the neural network.

## VARIANTS

While in the above main embodiment, the example of taking images from above is used, the images may also be taken laterally, e.g., of the side or front of the animal with a vertical wall behind the animal being used as the background plane. It will be understood that separate training will be required when images from different directions, e.g., above, side, front etc. are used.

While in the above-described embodiment, the example animal species is a pig, it will be understood that the method can be applied to other species, including but not limited to livestock such as cows, sheep, horses, ostriches, turkeys, chickens and ducks. Moreover, in the case of species with multiple breeds, the method may be applied to one or more specific breeds of a species, e.g., pigs of breeds such as berkshire, chester white, duroc or hampshire. The animal species may thus be a biped or a quadruped.

The animal species may also be human. For example, the method may be applied to images of people walking along a corridor taken from the side where one wall of the corridor provides the background plane. This may, for example, be useful in an airport gate to determine the aggregate weight of all passengers boarding a commercial flight. The aggregate passenger weight can then be summed with the freight load to estimate the overall payload for the flight. This can be used as an additional check that the payload does not exceed a certain limit. The estimated payload can also be used as a cross-check that the aircraft is fueled with an appropriate amount of fuel for the planned flight, which should not be too much, because of the excess fuel consumption that results from carrying excess fuel for the journey, or too little for obvious safety reasons.

As mentioned in passing when describing the main embodiment above, embodiments of the invention are possible which rely solely on the depth map image, i.e., do not need a 2D image. In such alternative embodiments, Step S2 of instance segmentation is carried out on the depth map image. The practical advantage of the main embodiment over the alternative embodiment is that most open-source neural network models have already been extensively trained on RGB images, so the amount of additional training of such a neural network model to adapt it specifically for the present invention is relatively modest, i.e., very good results can be achieved with modest effort. On the other hand, if segmentation is done on the depth map image, pre-trained open-source neural network models are not known to be available, in which case the neural network model will likely need to be trained *ab initio* and this would involve a significant amount of work with a large bespoke training dataset. Nevertheless, it is technically feasible to use depth map images for the segmentation.

In the main embodiment described above, the segmentation algorithm is based on a neural network. In alternative embodiments, the segmentation algorithm is based on classic image processing techniques such as one or more of the following:

- Variance based analysis to identify seed areas
- Adaptive thresholding
- Morphological operations (e.g., blob analysis)
- Contour identification
- Contour merging based on proximity heuristic rules
- Calculation of invariant image moments
- Edge extraction (e.g. Sobel edge detection)
- Curvature flow filtering
- Histogram matching to eliminate intensity variations between serial sections
- Multi-resolution rigid/affine image registration (gradient descent optimizer)
- Non-rigid deformation/transformation
- Superpixel clustering

Moreover, it is also possible in further embodiments to provide a segmentation algorithm that applies some classic image processing initially to pre-process the image data before supplying the pre-processed image data to a neural network.

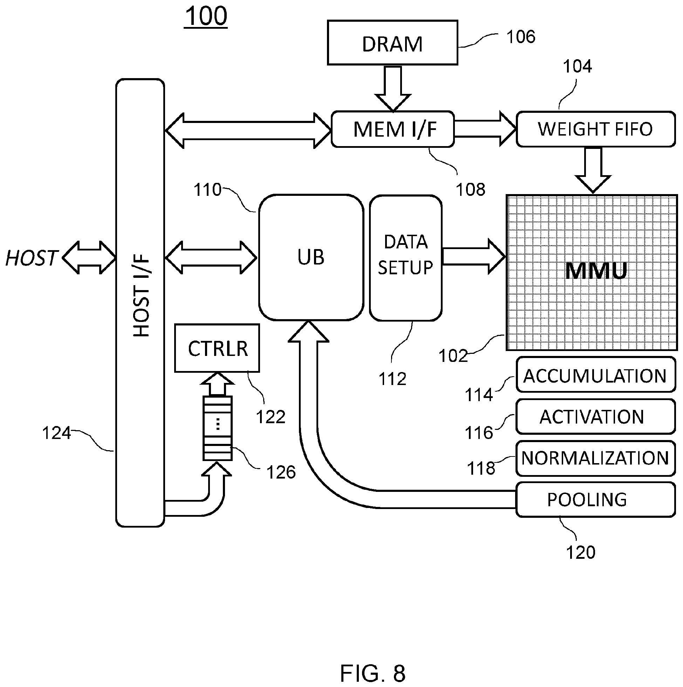

Figure 8 shows the TPU of Jouppi *et al* 2017 [5], being a simplified reproduction of Jouppi's Figure 1. The TPU 100 has a systolic matrix multiplication unit (MMU) 102 which contains 256x256 MACs that can perform 8-bit multiply-and-adds on signed or unsigned integers. The weights for the MMU are supplied through a weight FIFO buffer 104 that in turn reads the weights from a memory 106, in the form of an off-chip 8GB DRAM, via a suitable memory interface 108. A unified buffer (UB) 110 is provided to store the intermediate results. The MMU 102 is connected to receives inputs from the weight FIFO interface 104 and the UB 110 (via a systolic data setup unit 112) and outputs the 16-bit products of the MMU processing to an accumulator unit 114. An activation unit 116 performs nonlinear functions on the data held in the accumulator unit 114. After further processing by a normalizing unit 118 and a pooling unit 120, the intermediate results are sent to the UB 110 for resupply to the MMU 102 via the data setup unit 112. The pooling unit 120 may perform maximum pooling (i.e. maxpooling) or average pooling as desired. A programmable DMA controller 122 transfers data to or from the TPU's host computer and the UB 110. The TPU instructions are sent from the host computer to the controller 122 via a host interface 124 and an instruction buffer 126.

It will be understood that the computing power used for running the neural network, whether it be based on CPUs, GPUs or TPUs, may be hosted locally in a computer network, e.g. the one described below, or remotely in a data center which constitutes a network node. Moreover, an AI processing node may correspond to a single piece of physical processing equipment, e.g. as arranged in one or more racks of a server, or may itself be distributed over two or more pieces of physical processing equipment.

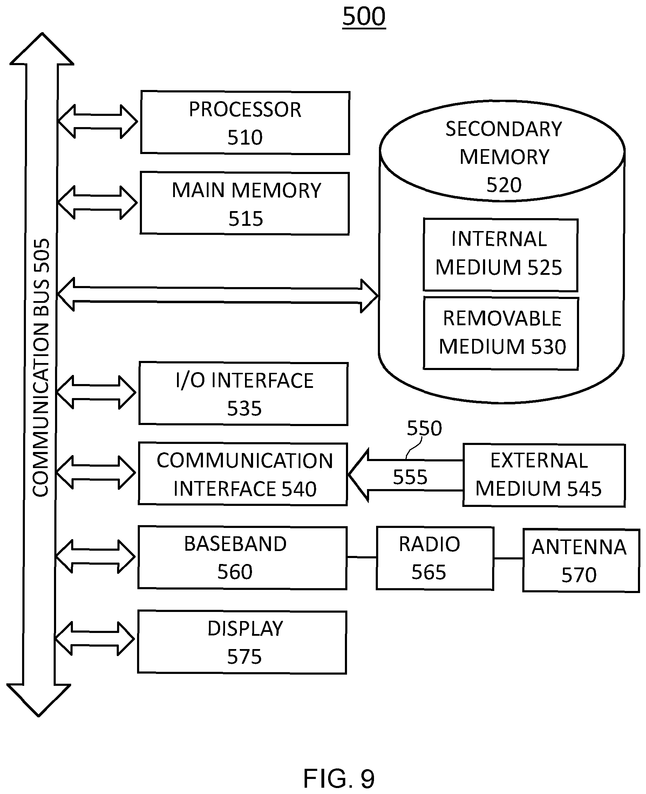

Figure 9 is a block diagram illustrating an example computing apparatus 500 that may be used in connection with various embodiments described herein. For example, computing apparatus 500 may be used as a computing node in the above-mentioned computer network system, for example a host computer from which CNN processing is carried out in conjunction with a suitable GPU, or the TPU shown in Figure 8.

Computing apparatus 500 can be a server or any conventional personal computer, or any other processor-enabled device that is capable of wired or wireless data communication. Other computing apparatus, systems and/or architectures may be also used, including devices that are not capable of wired or wireless data communication, as will be clear to those skilled in the art.

Computing apparatus 500 preferably includes one or more processors, such as processor 510. The processor 510 may be for example a CPU, GPU, TPU or arrays or combinations thereof such as CPU and TPU combinations or CPU and GPU combinations. Additional processors may be provided, such as an auxiliary processor to manage input/output, an auxiliary processor to perform floating point mathematical operations (e.g. a TPU), a special-purpose microprocessor having an architecture suitable for fast execution of signal processing algorithms (e.g., digital signal processor, image processor), a slave processor subordinate to the main processing system (e.g., back-end processor), an additional microprocessor or controller for dual or multiple processor systems, or a coprocessor. Such auxiliary processors may be discrete processors or may be integrated with the processor 510. Examples of CPUs which may be used with computing apparatus 500 are, the Pentium processor, Core i7 processor, and Xeon processor, all of which are available from Intel Corporation of Santa Clara, California. An example GPU which may be used with computing apparatus 500 is Tesla K80 GPU of Nvidia Corporation, Santa Clara, California.

Processor 510 is connected to a communication bus 505. Communication bus 505 may include a data channel for facilitating information transfer between storage and other peripheral components of computing apparatus 500. Communication bus 505 further may provide a set of signals used for communication with processor 510, including a data bus, address bus, and control bus (not shown). Communication bus 505 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, or standards promulgated by the Institute of Electrical and Electronics Engineers (IEEE) including IEEE 488 general-purpose interface bus (GPIB), IEEE 696/S-100, and the like.

Computing apparatus 500 preferably includes a main memory 515 and may also include a secondary memory 520. Main memory 515 provides storage of instructions and data for programs executing on processor 510, such as one or more of the functions and/or modules discussed above. It should be understood that computer readable program instructions stored in the memory and executed by processor 510 may be assembler instructions, instruction-set-architecture (ISA) instructions, machine instructions, machine dependent instructions, microcode, firmware instructions, state-setting data, configuration data for integrated circuitry, or either source code or object code written in and/or compiled from any combination of one or more programming languages, including without limitation Smalltalk, C/C++, Java, JavaScript, Perl, Visual Basic, .NET, and the like. Main memory 515 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Secondary memory 520 may optionally include an internal memory 525 and/or a removable medium 530. Removable medium 530 is read from and/or written to in any well-known manner. Removable storage medium 530 may be, for example, a magnetic tape drive, a compact disc (CD) drive, a digital versatile disc (DVD) drive, other optical drive, a flash memory drive, *etc.*

Removable storage medium 530 is a non-transitory computer-readable medium having stored thereon computer-executable code (i.e., software) and/or data. The computer software or data stored on removable storage medium 530 is read into computing apparatus 500 for execution by processor 510.

The secondary memory 520 may include other similar elements for allowing computer programs or other data or instructions to be loaded into computing apparatus 500. Such means may include, for example, an external storage medium 545 and a communication interface 540, which allows software and data to be transferred from external storage medium 545 to computing apparatus 500. Examples of external storage medium 545 may include an external hard disk drive, an external optical drive, an external magneto- optical drive, *etc.* Other examples of secondary memory 520 may include semiconductor- based memory such as programmable read-only memory (PROM), erasable programmable read-only memory (EPROM), electrically erasable read-only memory (EEPROM), or flash memory (block-oriented memory similar to EEPROM).

As mentioned above, computing apparatus 500 may include a communication interface 540. Communication interface 540 allows software and data to be transferred between computing apparatus 500 and external devices (e.g. printers), networks, or other information sources. For example, computer software or executable code may be transferred to computing apparatus 500 from a network server via communication interface 540. Examples of communication interface 540 include a built-in network adapter, network interface card (NIC), Personal Computer Memory Card International Association (PCMCIA) network card, card bus network adapter, wireless network adapter, Universal Serial Bus (USB) network adapter, modem, a network interface card (NIC), a wireless data card, a communications port, an infrared interface, an IEEE 1394 fire-wire, or any other device capable of interfacing system 550 with a network or another computing device. Communication interface 540 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Software and data transferred via communication interface 540 are generally in the form of electrical communication signals 555. These signals 555 may be provided to communication interface 540 via a communication channel 550. In an embodiment, communication channel 550 may be a wired or wireless network, or any variety of other communication links.

Communication channel 550 carries signals 555 and can be implemented using a variety of wired or wireless communication means including wire or cable, fiber optics, conventional phone line, cellular phone link, wireless data communication link, radio frequency ("RF") link, or infrared link, just to name a few.

Computer-executable code (i.e., computer programs or software) is stored in main memory 515 and/or the secondary memory 520. Computer programs can also be received via communication interface 540 and stored in main memory 515 and/or secondary memory 520. Such computer programs, when executed, enable computing apparatus 500 to perform the various functions of the disclosed embodiments as described elsewhere herein.

In this document, the term "computer-readable medium" is used to refer to any non-transitory computer-readable storage media used to provide computer-executable code (e.g., software and computer programs) to computing apparatus 500. Examples of such media include main memory 515, secondary memory 520 (including internal memory 525, removable medium 530, and external storage medium 545), and any peripheral device communicatively coupled with communication interface 540 (including a network information server or other network device). These non-transitory computer-readable media are means for providing executable code, programming instructions, and software to computing apparatus 500. In an embodiment that is implemented using software, the software may be stored on a computer-readable medium and loaded into computing apparatus 500 by way of removable medium 530, I/O interface 535, or communication interface 540. In such an embodiment, the software is loaded into computing apparatus 500 in the form of electrical communication signals 555. The software, when executed by processor 510, preferably causes processor 510 to perform the features and functions described elsewhere herein.

I/O interface 535 provides an interface between one or more components of computing apparatus 500 and one or more input and/or output devices. Example input devices include, without limitation, keyboards, touch screens or other touch-sensitive devices, biometric sensing devices, computer mice, trackballs, pen-based pointing devices, and the like. Examples of output devices include, without limitation, cathode ray tubes (CRTs), plasma displays, light-emitting diode (LED) displays, liquid crystal displays (LCDs), printers, vacuum florescent displays (VFDs), surface-conduction electron-emitter displays (SEDs), field emission displays (FEDs), and the like.

Computing apparatus 500 also includes optional wireless communication components that facilitate wireless communication over a voice network and/or a data network. The wireless communication components comprise an antenna system 570, a radio system 565, and a baseband system 560. In computing apparatus 500, radio frequency (RF) signals are transmitted and received over the air by antenna system 570 under the management of radio system 565.

Antenna system 570 may comprise one or more antennae and one or more multiplexors (not shown) that perform a switching function to provide antenna system 570 with transmit and receive signal paths. In the receive path, received RF signals can be coupled from a multiplexor to a low noise amplifier (not shown) that amplifies the received RF signal and sends the amplified signal to radio system 565.

Radio system 565 may comprise one or more radios that are configured to communicate over various frequencies. In an embodiment, radio system 565 may combine a demodulator (not shown) and modulator (not shown) in one integrated circuit (IC). The demodulator and modulator can also be separate components. In the incoming path, the demodulator strips away the RF carrier signal leaving a baseband receive audio signal, which is sent from radio system 565 to baseband system 560.

If the received signal contains audio information, then baseband system 560 decodes the signal and converts it to an analogue signal. Then the signal is amplified and sent to a speaker. Baseband system 560 also receives analogue audio signals from a microphone. These analogue audio signals are converted to digital signals and encoded by baseband system 560. Baseband system 560 also codes the digital signals for transmission and generates a baseband transmit audio signal that is routed to the modulator portion of radio system 565. The modulator mixes the baseband transmit audio signal with an RF carrier signal generating an RF transmit signal that is routed to antenna system 570 and may pass through a power amplifier (not shown). The power amplifier amplifies the RF transmit signal and routes it to antenna system 570 where the signal is switched to the antenna port for transmission.

Baseband system 560 is also communicatively coupled with processor 510, which may be a central processing unit (CPU). Processor 510 has access to data storage areas 515 and 520. Processor 510 is preferably configured to execute instructions (i.e., computer programs or software) that can be stored in main memory 515 or secondary memory 520. Computer programs can also be received from baseband processor 560 and stored in main memory 510 or in secondary memory 520 or executed upon receipt. Such computer programs, when executed, enable computing apparatus 500 to perform the various functions of the disclosed embodiments. For example, data storage areas 515 or 520 may include various software modules.

The computing apparatus further comprises a display 575 directly attached to the communication bus 505 which may be provided instead of or addition to any display connected to the I/O interface 535 referred to above.

Various embodiments may also be implemented primarily in hardware using, for example, components such as application specific integrated circuits (ASICs), programmable logic arrays (PLA), or field programmable gate arrays (FPGAs). Implementation of a hardware state machine capable of performing the functions described herein will also be apparent to those skilled in the relevant art. Various embodiments may also be implemented using a combination of both hardware and software.

Furthermore, those of skill in the art will appreciate that the various illustrative logical blocks, modules, circuits, and method steps described in connection with the above-described figures and the embodiments disclosed herein can often be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled persons can implement the described functionality in varying ways for each particular application, but such implementation decisions should not be interpreted as causing a departure from the scope of the invention. In addition, the grouping of functions within a module, block, circuit, or step is for ease of description. Specific functions or steps can be moved from one module, block, or circuit to another without departing from the invention.

Moreover, the various illustrative logical blocks, modules, functions, and methods described in connection with the embodiments disclosed herein can be implemented or performed with a general-purpose processor, a digital signal processor (DSP), an ASIC, FPGA, or other programmable logic device, discrete gate or transistor logic, discrete hardware components, or any combination thereof designed to perform the functions described herein. A general-purpose processor can be a microprocessor, but in the alternative, the processor can be any processor, controller, microcontroller, or state machine. A processor can also be implemented as a combination of computing devices, for example, a combination of a DSP and a microprocessor, a plurality of microprocessors, one or more microprocessors in conjunction with a DSP core, or any other such configuration.

Additionally, the steps of a method or algorithm described in connection with the embodiments disclosed herein can be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or any other form of storage medium including a network storage medium. An exemplary storage medium can be coupled to the processor such that the processor can read information from, and write information to, the storage medium. In the alternative, the storage medium can be integral to the processor. The processor and the storage medium can also reside in an ASIC.

A computer readable storage medium, as referred to herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Any of the software components described herein may take a variety of forms. For example, a component may be a stand-alone software package, or it may be a software package incorporated as a "tool" in a larger software product. It may be downloadable from a network, for example, a website, as a stand-alone product or as an add-in package for installation in an existing software application. It may also be available as a client- server software application, as a web-enabled software application, and/or as a mobile application.

Embodiments of the present invention are described herein with reference to flowchart

illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The illustrated flowcharts and block diagrams illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Apparatus and methods embodying the invention are capable of being hosted in and delivered by a cloud-computing environment. Cloud computing is a model of service delivery for enabling convenient, on-demand network access to a shared pool of configurable computing resources (e.g., networks, network bandwidth, servers, processing, memory, storage, applications, virtual machines, and services) that can be rapidly provisioned and released with minimal management effort or interaction with a provider of the service. This cloud model may include at least five characteristics, at least three service models, and at least four deployment models.

In summary, we have described in the above detailed description a computer-implemented image processing method and apparatus for estimating a physical parameter of an animal of a particular species or breed. An image dataset including a depth map image is acquired by an image acquisition device to capture an image of the animal. A plane estimation algorithm analyzes the depth map image to determine a background plane behind the animal. A segmentation algorithm identifies a mask for the animal. Depth values outside the animal mask are reset to the distance between the viewpoint of the image acquisition device and the estimated background plane. The depth map image is normalized to restrict the data to a fixed numerical range and thereby generate a processed depth map image of triplicated depth data with distance (T3D). The processed depth map image with its reset depth values for the background plane is supplied to a pre-trained neural network which outputs an estimated value of the physical parameter for the animal.

It will be clear to one skilled in the art that many improvements and modifications can be made to the foregoing exemplary embodiments without departing from the scope of the present disclosure.

REFERENCES

[1] Zhang, J.; Zhuang, Y.; Ji, H.; Teng, G. Pig Weight and Body Size Estimation Using a Multiple Output Regression Convolutional Neural Network: A Fast and Fully Automatic Method. Sensors 2021, 21, 3218. https://doi.org/10.3390/s21093218

[2] Suwannakhun, S.; Daungmala, P. Estimating Pig Weight with Digital Image Processing using Deep Learning. In Proceedings of the 2018 14th International Conference on Signal-Image Technology & Internet-Based Systems (SITIS), Beijing, China, 26-29 November 2018

[3] US2022221325A1 (Viking Genetics FMBA)

[4] CN113240574A (Shenzhen Xiwei Intelligent Technology Co Ltd)

[5] Jouppi, Young, Patil et al "In-Datacenter Performance Analysis of a Tensor Processing Unit" 44th International Symposium on Computer Architecture (ISCA), Toronto, Canada, 24-28 June 2017 (submitted 16 April 2017), arXiv:1704.04760 [cs.AR]

**Claims**

1. A computer-implemented image processing method for determining a value for a physical parameter of an animal of a specified species or breed, the method comprising:

   providing an image dataset of an image area including a depth map image captured by a camera from a viewpoint, the image area containing an animal imaged against a background plane,

   analyzing the depth map image with a plane estimation algorithm to identify the background plane and from that determine a distance value between the viewpoint and the background plane;

   applying a segmentation algorithm to the image dataset to identify an animal in the image area and define a corresponding animal mask;

   modifying the depth map image to reset depth values lying outside the animal mask to the viewpoint-to-background-plane distance value;

   normalizing the depth map image to restrict the data to a fixed numerical range to generate a processed depth map image of triplicated depth data with distance (T3D);

   supplying the processed depth map image with its reset depth values to a neural network to determine a physical parameter of the animal, the neural network having been previously trained through analysis of similar image datasets of animals of the specified species or breed; and

   receiving an estimated value of the physical parameter of the animal as output from the neural network.

2. The method of claim 1, wherein the image dataset of the image area further includes a two-dimensional image captured from said viewpoint, and wherein the segmentation algorithm is applied to the two-dimensional image to identify the animal in the image area and define the corresponding animal mask.

3. The method of claim 1, wherein the segmentation algorithm is applied to the depth map image to identify the animal in the image area and define the corresponding animal mask.

4. The method of any of claims 1 to 3, wherein the viewpoint is located above the animal and wherein the background plane is of ground on which the animal is situated.

5. The method of any of claims 1 to 3, wherein the viewpoint is located to one side of the animal and wherein the background plane is of a wall beside which the animal is located.

6. The method of any preceding claim, wherein the physical parameter of the animal is one of; weight and a distance dimension.

7. The method of any preceding claim, wherein the segmentation algorithm identifies an animal conditional on the animal mask being consistent with a complete animal of the species or breed which the method is configured to process.

8. The method of claim 7, wherein the segmentation algorithm identifies an animal further conditional on the animal mask being consistent with the animal being in a specific pose.

9. The method of claim 8, wherein the pose is a standing pose and the animal species is a biped or quadruped.

10. The method of any of claims 1 to 9, wherein the segmentation algorithm is based on image processing with a further neural network, the further neural network having been previously trained through analysis of similar image datasets of animals of the specified species or breed.

11. The method of any of claims 1 to 9, wherein the segmentation algorithm is based on classic image processing.

12. The method of any preceding claim, wherein the image area contains multiple animal instances imaged against the background plane, and, in case of multiple animal instances being identified in the image area by the segmentation algorithm, selecting one of these animal instances for further processing, wherein the other animal instances are treated as background by having their depth values reset to the viewpoint-to-background-plane distance.

13. The method of claim 12, wherein said further processing is carried out separately for each animal instance to determine a physical parameter value for each animal instance identified in the image area.

14. A computer apparatus loaded with machine readable instructions for performing the method of any preceding claim.

**Patentansprüche**

1. Ein computergestütztes Bildverarbeitungsverfahren zur Bestimmung eines Wertes für einen physikalischen Parameter eines Tieres einer bestimmten Art oder Rasse, wobei das Verfahren umfasst:

   Bereitstellen eines Bilddatensatzes eines Bildbereichs, der ein von einer Kamera aus einem Blickwinkel aufgenommenes Tiefenkartenbild umfasst, wobei der Bildbereich ein vor einem Hintergrund abgebildetes Tier enthält,
   Analysieren des Tiefenkartenbildes mit einem Ebenenschätzungsalgorithmus, um die Hintergrundebene zu identifizieren und daraus einen Abstandswert zwischen dem Blickpunkt und der Hintergrundebene zu bestimmen;
   Anwenden eines Segmentierungsalgorithmus auf den Bilddatensatz, um ein Tier im Bildbereich zu identifizieren und eine entsprechende Tiermaske zu definieren;
   Modifizieren des Tiefenkartenbildes, um Tiefenwerte, die außerhalb der Tiermaske liegen, auf den Abstand zwischen dem Blickpunkt und der Hintergrundebene zurückzusetzen;
   Normalisieren des Tiefenkartenbildes, um die Daten auf einen festen Zahlenbereich zu beschränken, um ein verarbeitetes Tiefenkartenbild mit dreifachen Tiefendaten mit Abstand (T3D) zu erzeugen;
   Liefern des verarbeiteten Tiefenkartenbildes mit seinen zurückgesetzten Tiefenwerten an ein neuronales Netzwerk, um einen physikalischen Parameter des Tieres zu bestimmen, wobei das neuronale Netzwerk zuvor durch Analyse ähnlicher Bilddatensätze von Tieren der angegebenen Art oder Rasse trainiert wurde; und
Empfangen eines geschätzten Werts des physikalischen Parameters des Tieres als Ausgabe des neuronalen Netzwerks.

2. Verfahren nach Anspruch 1, wobei der Bilddatensatz des Bildbereichs ferner ein von dem Blickpunkt aus aufgenommenes zweidimensionales Bild umfasst und wobei der Segmentierungsalgorithmus auf das zweidimensionale Bild angewendet wird, um das Tier im Bildbereich zu identifizieren und die entsprechende Tiermaske zu definieren.

3. Verfahren nach Anspruch 1, wobei der Segmentierungsalgorithmus auf das Tiefenkartenbild angewendet wird, um das Tier im Bildbereich zu identifizieren und die entsprechende Tiermaske zu definieren.

4. Verfahren nach einem der Ansprüche 1 bis 3, wobei sich der Blickpunkt über dem Tier befindet und wobei die Hintergrundebene der Boden ist, auf dem sich das Tier befindet.

5. Verfahren nach einem der Ansprüche 1 bis 3, wobei sich der Blickpunkt auf einer Seite des Tieres befindet und wobei die Hintergrundebene eine Wand ist, neben der sich das Tier befindet.

6. Verfahren nach einem der vorstehenden Ansprüche, wobei der physikalische Parameter des Tieres einer der folgenden ist: Gewicht und eine Abstandsgröße.

7. Verfahren nach einem der vorstehenden Ansprüche, wobei der Segmentierungsalgorithmus ein Tier identifiziert, sofern die Tiermaske mit einem vollständigen Tier der Art oder Rasse übereinstimmt, für deren Verarbeitung das Verfahren konfiguriert ist.

8. Verfahren nach Anspruch 7, wobei der Segmentierungsalgorithmus ein Tier ferner unter der Bedingung identifiziert, dass die Tiermaske mit dem Tier in einer bestimmten Pose übereinstimmt.

9. Verfahren nach Anspruch 8, wobei die Pose eine stehende Pose ist und die Tierart ein Zweibeiner oder Vierbeiner ist.

10. Verfahren nach einem der Ansprüche 1 bis 9, wobei der Segmentierungsalgorithmus auf einer Bildverarbeitung mit einem weiteren neuronalen Netzwerk basiert, wobei das weitere neuronale Netzwerk zuvor durch Analyse ähnlicher Bilddatensätze von Tieren der angegebenen Art oder Rasse trainiert wurde.

**11.** Verfahren nach einem der Ansprüche 1 bis 9, wobei der Segmentierungsalgorithmus auf klassischer Bildverarbeitung basiert.

**12.** Verfahren nach einem der vorstehenden Ansprüche, wobei der Bildbereich mehrere Tierinstanzen enthält, die vor dem Hintergrundbild abbildet, und wobei im Falle der Identifizierung mehrerer Tierinstanzen im Bildbereich durch den Segmentierungsalgorithmus eine dieser Tierinstanzen zur weiteren Verarbeitung ausgewählt wird, wobei die anderen Tierinstanzen als Hintergrund behandelt werden, indem ihre Tiefenwerte auf den Abstand zwischen Blickpunkt und Hintergrundebene zurückgesetzt werden.

**13.** Verfahren nach Anspruch 12, wobei die weitere Verarbeitung für jede Tierinstanz separat durchgeführt wird, um einen physikalischen Parameterwert für jede im Bildbereich identifizierte Tierinstanz zu bestimmen.

**14.** Eine Computeranordnung, die mit maschinenlesbaren Anweisungen zum Ausführen des Verfahrens nach einem der vorstehenden Ansprüche geladen ist.

**Revendications**

**1.** Procédé de traitement d'images mis en œuvre par ordinateur pour déterminer une valeur d'un paramètre physique d'un animal d'une espèce ou d'une race spécifiée, le procédé comprenant :

fournir un ensemble de données d'images d'une zone d'image comprenant une image de carte de profondeur capturée par une caméra à partir d'un point de vue, la zone d'image contenant un animal photographié sur un plan d'arrière-plan, analyser l'image de carte de profondeur à l'aide d'un algorithme d'estimation de plan afin d'identifier le plan d'arrière-plan et, à partir de celui-ci, déterminer une valeur de distance entre le point de vue et le plan d'arrière-plan ; l'application d'un algorithme de segmentation à l'ensemble de données d'images afin d'identifier un animal dans la zone d'image et de définir un masque d'animal correspondant ; la modification de l'image de carte de profondeur pour réinitialiser les valeurs de profondeur situées à l'extérieur du masque de l'animal à la valeur de distance entre le point de vue et le plan d'arrière-plan ; normaliser l'image de la carte de profondeur afin de limiter les données à une plage numérique fixe pour générer une image de carte de profondeur traitée de données de profondeur triplées avec distance (T3D) ;

fournir l'image de carte de profondeur traitée avec ses valeurs de profondeur réinitialisées à un réseau neuronal afin de déterminer un paramètre physique de l'animal, le réseau neuronal ayant été préalablement entraîné par l'analyse d'ensembles de données d'images similaires d'animaux de l'espèce ou de la race spécifiée ; et

recevoir une valeur estimée du paramètre physique de l'animal en tant que sortie du réseau neuronal.

**2.** Procédé selon la revendication 1, dans lequel l'ensemble de données d'images de la zone d'image comprend en outre une image bidimensionnelle capturée à partir dudit point de vue, et dans lequel l'algorithme de segmentation est appliqué à l'image bidimensionnelle pour identifier l'animal dans la zone d'image et définir le masque animal correspondant.

**3.** Procédé selon la revendication 1, dans lequel l'algorithme de segmentation est appliqué à l'image de la carte de profondeur afin d'identifier l'animal dans la zone d'image et de définir le masque animal correspondant.

**4.** Procédé selon l'une quelconque des revendications 1 à 3, dans lequel le point de vue est situé au-dessus de l'animal et dans lequel le plan d'arrière-plan est le sol sur lequel se trouve l'animal.

**5.** Procédé selon l'une quelconque des revendications 1 à 3, dans lequel le point de vue est situé d'un côté de l'animal et dans lequel le plan d'arrière-plan est un mur à côté duquel se trouve l'animal.

**6.** Procédé selon l'une quelconque des revendications précédentes, dans lequel le paramètre physique de l'animal est l'un des suivants : le poids et une dimension de distance.

**7.** Procédé selon l'une quelconque des revendications précédentes, dans lequel l'algorithme de segmentation identifie un animal à condition que le masque de l'animal soit compatible avec un animal complet de l'espèce ou de la race que le procédé est configuré pour traiter.

**8.** Procédé selon la revendication 7, dans lequel l'algorithme de segmentation identifie un animal à condition supplémentaire que le masque animal soit compatible avec l'animal dans une pose spécifique.

**9.** Procédé selon la revendication 8, dans lequel la pose est une pose debout et l'espèce animale est un bipède ou un quadrupède.

**10.** Procédé selon l'une quelconque des revendications 1 à 9, dans lequel l'algorithme de segmentation est basé sur un traitement d'image avec un autre réseau neuronal, l'autre réseau neuronal ayant été préalablement entraîné par l'analyse d'ensembles de données d'images similaires d'animaux de l'espèce ou de la race spécifiée.

**11.** Procédé selon l'une quelconque des revendications 1 à 9, dans lequel l'algorithme de segmentation est basé sur un traitement d'image classique.

**12.** Procédé selon l'une quelconque des revendications précédentes, dans lequel la zone d'image contient plusieurs instances d'animaux représentées sur le plan d'arrière-plan et, dans le cas où plusieurs instances d'animaux sont identifiées dans la zone d'image par l'algorithme de segmentation, l'une de ces instances d'animaux est sélectionnée pour un traitement ultérieur, les autres instances d'animaux étant traitées comme arrière-plan en réinitialisant leurs valeurs de profondeur à la distance entre le point de vue et le plan d'arrière-plan.

**13.** Procédé selon la revendication 12, dans lequel ledit traitement ultérieur est effectué séparément pour chaque instance animale afin de déterminer une valeur de paramètre physique pour chaque instance animale identifiée dans la zone d'image.

**14.** Appareil informatique chargé d'instructions lisibles par machine pour exécuter le procédé de l'une quelconque des revendications précédentes.

FIG. 1A

FIG. 1

FIG. 2

FIG. 3

FIG. 4

FIG. 5

FIG. 6

FIG. 7

FIG. 8

## 500

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022221325 A1, Viking Genetics FMBA
- CN 113240574 A, Shenzhen Xiwei Intelligent Technology Co Ltd
- CN 110288580 A
- US 2023342902 A1

**Non-patent literature cited in the description**

- **ZHANG, J.** ; **ZHUANG, Y.** ; **JI, H.** ; **TENG, G.** Pig Weight and Body Size Estimation Using a Multiple Output Regression Convolutional Neural Network: A Fast and Fully Automatic Method. *Sensors*, 2021, vol. 21, 3218, https://doi.org/10.3390/s21093218
- **SUWANNAKHUN, S** ; **DAUNGMALA, P.** Estimating Pig Weight with Digital Image Processing using Deep Learning. *Proceedings of the 2018 14th International Conference on Signal-Image Technology & Internet-Based Systems (SITIS)*, 26 November 2018
- **FRANÇOIS CHOLLET**. *Xception: Deep Learning with Depthwise Separable Convolutions*, 2017, http://arxiv.org/abs/1610.02357
- **SUWANNAKHUN, S.** ; **DAUNGMALA, P.** Estimating Pig Weight with Digital Image Processing using Deep Learning.. *Proceedings of the 2018 14th International Conference on Signal-Image Technology & Internet-Based Systems (SITIS)*, 26 November 2016
- **JOUPPI** ; **YOUNG** ; **PATIL et al.** In-Datacenter Performance Analysis of a Tensor Processing Unit. *44th International Symposium on Computer Architecture (ISCA)*, 16 April 2017